# EUROPÄISCHE PATENTSCHRIFT

(11) **EP 2 408 579 B1**
(45) Veröffentlichungstag und Bekanntmachung des Hinweises auf die Patenterteilung: **14.10.2020**
(21) Anmeldenummer: 10722537.7
(22) Anmeldetag: 16.03.2010
(51) Int. Cl.: B23B 31/02

(54) **SCHRUMPFFUTTER-WERKZEUGAUFNAHME**
SHRINK-FIT CHUCK TOOL HOLDER
PORTE-OUTIL À MANDRIN DE FRETTAGE

(30) Priorität: 17.03.2009 DE 102009013646; 05.06.2009 DE 102009023999; 04.09.2009 DE 102009040173
(43) Veröffentlichungstag der Anmeldung: 25.01.2012
(73) Patentinhaber: Gühring KG, 72458 Albstadt (DE)
(72) Erfinder: AYGÜN, Hakki, 72505 Krauchenwies / Göggingen (DE)
(74) Vertreter: Winter, Brandl, Fürniss, Hübner, Röss, Kaiser, Polte - Partnerschaft mbB
(86) Internationale Anmeldenummer: PCT/DE2010/000287
(87) Internationale Veröffentlichungsnummer: WO 2010/105603

(56) Entgegenhaltungen:
- WO-A1-90/10517
- WO-A2-2007/042020
- DE-A1-102006 028 408
- GB-A- 2 084 908
- JP-A- 60 191 734
- US-A1- 2003 193 148

## Beschreibung

Die vorliegende Erfindung betrifft eine Schrumpffutter-Werkzeugaufnahme mit einer Stelleinrichtung zur axialen Abstützung eines Schaftwerkzeugs gemäß dem Oberbegriff des Anspruchs 1.

Schrumpffutter zeichnen sich aus durch einen einfachen Werkzeugwechsel, Übertragungen von hohen Drehmomenten, eine schlanke Bauweise und eine an sich hohe Rundlaufgenauigkeit. Das Prinzip dieser Spanntechnik ist recht einfach. Der Spannabschnitt weist eine Bohrung zur Aufnahme des Schaftwerkzeugs auf, wobei der Durchmesser dieser Bohrung gegenüber dem Schaftdurchmesser des Werkzeugs ein Untermass aufweist. Durch Erwärmen des Spannabschnitts, z. B. durch Induktion, weitet sich der Spannabschnitt auf, so dass der Werkzeugschaft in die Aufnahmebohrung eingeführt werden kann. Durch Abkühlen des Spannabschnitts schrumpft dieser und bildet dabei eine hochfeste reibschlüssige Verbindung mit dem Werkzeugschaft. Als axiale Abstützung des Schaftwerkzeugs in dem Schrumpffutter dient oftmals eine Längeneinstellschraube, über welche die axiale Position des Werkzeugs im Schrumpffutter stufenlos eingestellt werden kann.

DE 10 2006 028 408 A1 offenbart eine Schrumpffutter-Werkzeugaufnahme gemäß dem Oberbegriff des Anspruchs 1. Um das Spiel zwischen der Auszugssicherung und dem Werkzeug zu minimieren, wird das Werkzeug nach dem Einschrumpfen des Werkzeugs mittels einer Längeneinstellschraube in axialer Richtung vorgespannt.

Bei dem zuvor erwähnten Erwärmungs- und Schrumpfungsvorgang ändern sich die Abmessungen des Spannabschnitts nicht nur in radialer, sondern auch in axialer Richtung. Dies führt dazu, dass das im aufgeweiteten Zustand eingeführte Schaftwerkzeug beim Schrumpfungsvorgang nicht nur eine Radialkraft, sondern aufgrund der axialen Verkürzung des Spannabschnitts auch eine Axialkraft erfährt und deshalb gegen die Längeneinstellschraube gedrückt wird. Wenn die Anschlagfläche der Längeneinstellschraube und/oder das Schaftende des Werkzeugs Planfehler im µ-Bereich aufweisen oder der Gewindelauf der Einstellschraube oder des Futters nicht koaxial zur Drehachse verläuft, kann ein Teil der oben erwähnten Axialkraft des Schrumpffutters über das Werkzeug auf die Längeneinstellschraube in eine radiale Kraftkomponente am Schaftende umgewandelt werden, so dass die Achse des Schaftwerkzeugs bezüglich der Drehachse gekippt und/oder versetzt wird. Dadurch entstehen Rundlaufungenauigkeiten, welche sich umso mehr verstärken, je länger das Werkzeug ist.

Aufgabe der vorliegenden Erfindung ist es deshalb, eine Schrumpffutter-Werkzeugaufnahme bereitzustellen, welche trotz fertigungsbedingter Fehler im Werkzeug oder Futter eine hohe Rundlaufgenauigkeit ermöglicht.

Diese Aufgabe wird durch die Merkmale des Anspruchs 1 gelöst. Weitere vorteilhafte Weiterbildungen der erfindungsgemäßen Schrumpffutter-Werkzeugaufnahme sind Gegenstand der Unteransprüche.

Die erfindungsgemäße Schrumpffutter-Werkzeugaufnahme weist einen Befestigungsabschnitt für den Anschluss an eine Werkzeugmaschine, einen thermisch aufweitbaren Schrumpfabschnitt, der eine Bohrung zur vorzugsweise zentrierten Aufnahme eines Werkzeugschaftes aufweist, und eine Stelleinrichtung, welche in der Bohrung axial beweglich angeordnet ist und über welche die axiale Position des Schaftwerkzeuges vor einem Schrumpfungsvorgang im Schrumpfabschnitt einstellbar ist, auf.

Erfindungsgemäß weist die Stelleinrichtung auf der dem Schaftwerkzeug zugewandten Seite einen Ausgleichsabschnitt zum Ausgleichen oder wenigstens Verringern schrumpfungsbedingter Positions- und/oder Lageänderungen des Schaftwerkzeugs auf. Die erfindungsgemäße Stelleinrichtung ist demnach so ausgebildet, dass sie einen speziellen Abschnitt aufweist, der die eingangs erwähnte axiale Positionsänderung des Schaftwerkzeugs und die damit verbundene Axialkraft auf die Stelleinrichtung auffangen bzw. ausgleichen kann und damit verhindert, dass die Axialkraft in eine radiale Kraftkomponente umgewandelt wird. Fehlt diese Radialkraftkomponente bzw. wird diese auf ein Minimum begrenzt, so kommt es auch zu keiner Verkippung der Werkzeugachse bezüglich der Drehachse des Schrumpffutters. Durch diese Ausgleichsfunktion der Stelleinrichtung kann die an sich schon recht hohe Rundlaufgenauigkeit eines Schrumpffutters weiter verbessert werden, da minimalste Planfehler bzw. Koaxialabweichungen der Einzelteile über die Stelleinrichtung ausgeglichen werden.

Erfindungsgemäß weist der Ausgleichsabschnitt eine geringere Härte und/oder größere Elastizität als die Schrumpffutterwerkzeugaufnahme, der Einstellabschnitt und das Schaftwerkzeug auf. Auf diese Weise kann sichergestellt werden, dass der Ausgleichsabschnitt die schrumpfungsbedingten Positions- und/oder Lageänderungen ausgleicht, bevor diese zu Spannungen im Futter oder im Werkzeug führen, welche Auswirkungen auf die Rundlaufgenauigkeit der Anordnung insgesamt haben können.

Der Einstellabschnitt ist erfindungsgemäß eine Längeneinstellschraube und der Ausgleichsabschnitt ist entweder als ein in der Längeneinstellschraube vorgesehener und vorstehender O-Ring, der in einer entsprechenden Nut an der Stirnseite der Längeneinstellschraube aufgenommen ist; oder als ein O-Ring, der sich in einem konischen Abschnitt der Längeneinstellschraube befindet, so dass die Kegelfläche eines Werkzeugschaftendes an diesem in Anlage kommt, ausgebildet.

Ferner sollte der Ausgleichsabschnitt so dimensioniert werden, dass zumindest dessen axiale Erstreckung größer als die schrumpfungsbedingte axiale Positionsänderung des Werkzeugs ist. Dadurch kann sichergestellt werden, dass der Ausgleichsabschnitt die gesamte axiale Positionsänderung und die damit verbundene Axialkraft aufnehmen kann und verhindert, dass mit Planfehler behaftete Teile aufeinander treffen und radial abgelenkt werden.

Vorteilhafterweise weist die Stelleinrichtung zumindest einen Kühlmittelkanal auf, um das Schaftwerkzeug mit Kühlmittel versorgen zu können. Die erfindungsgemäße Stelleinrichtung schafft somit die oben erwähnte Ausgleichsfunktion, ohne auf die Kühlmittelversorgung des Schaftwerkzeugs verzichten zu müssen. Je nach Art der Kühlmittelversorgung kann der Ausgleichsabschnitt auf der dem Schaftwerkzeug zugewandten Seite einen planen Anschlag für plane Schaftenden (konventionelle Kühlung) oder einen konischen Anschlag für kegelförmige Schaftenden (Minimalmengenschmierung (MMS) -Kühlung) aufweisen. Die erfindungsgemäße Stelleinrichtung kann somit unabhängig von der Art der Kühlmittelzuführung eingesetzt werden.

### Kurze Beschreibung der Figuren

Es zeigen:
Fig. 1 eine Querschnittsansicht eines Schrumpffutters mit einer Längeneinstellschraube nach dem Stand der Technik mit einem darin einzuspannenden Schaftwerkzeug;
Fig. 2 die Detailansicht II-II der Fig. 1;
Fign. 3A und 3B eine Längeneinstellschraube mit einem Schaftende vor und nach dem Schrumpfungsvorgang;
Fig. 4 eine Querschnittsansicht eines Schrumpffutters mit einer für MMS-Einspeisung angepassten Längeneinstellschraube mit kegelförmigem Anschlag und einem Schaftwerkzeug mit kegelförmigem Schaftende;
Fig. 5A und 5B eine Stelleinrichtung und ein Schaftende gemäß einer Ausführungsform der Erfindung vor bzw. nach dem Schrumpfungsvorgang;
Fig. 6A und 6B eine Stelleinrichtung und ein Schaftende gemäß der Ausführungsform der Erfindung vor bzw. nach dem Schrumpfungsvorgang mit einer noch verbleibenden minimalen Radialkraftkomponente; und
Fig. 7 eine Variante der Stelleinrichtung gemäß der Ausführungsform.

### Detaillierte Beschreibung bevorzugter Ausführungsformen

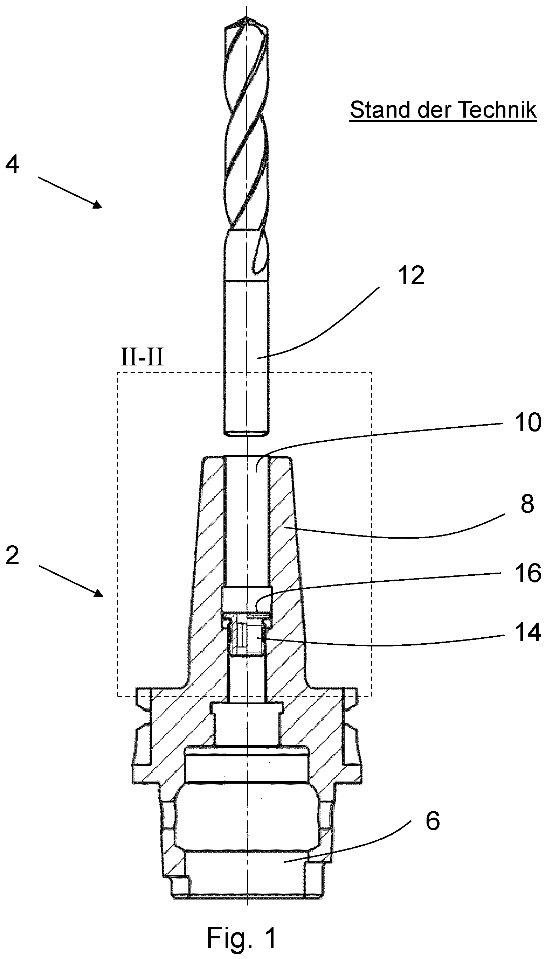

Fig. 1 zeigt einen Querschnitt eines Schrumpffutters 2 und ein darin einzuspannendes Werkzeug 4. Das Schrumpffutter hat einen Befestigungsabschnitt 6 zur Anbindung an eine nicht gezeigte Werkzeugmaschine sowie einen thermisch aufweitbaren Spannabschnitt 8 mit einer Bohrung 10 zur Aufnahme eines zylindrischen Schaftabschnitts 12 des Werkzeugs 4. Im Schrumpffutter 2 befindet sich ferner eine Längeneinstellschraube 14, welche als Anschlag für das Werkzeug 4 dient und axial beweglich in dem Schrumpffutter 2 angeordnet ist.

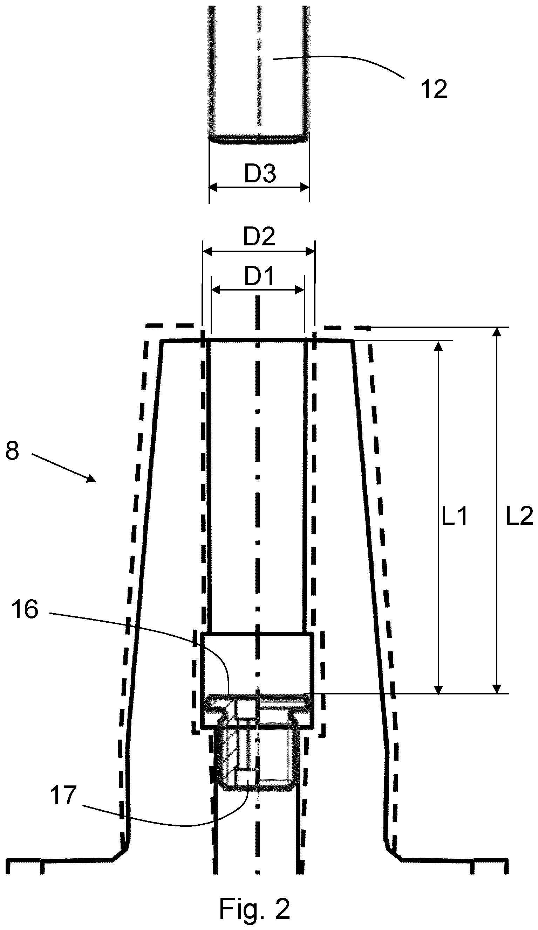

Fig. 2 zeigt eine Detailansicht des Ausschnitts II-II in der Fig. 1, wobei zwei Zustände des Spannabschnitts 8 gezeigt sind. Die durchgezogenen Linien geben die Abmessungen des Spannabschnitts 8 im kalten Zustand und die gestrichelten Linien die Abmessungen im thermisch aufgeweiteten Zustand wieder. Die thermische Aufweitung kann z. B. mittels eines aus dem Stand der Technik bekannten Induktionsschrumpfgerätes erfolgen. Die Bohrung 10 hat im erkalteten Zustand einen Durchmesser D1 und im thermisch aufgeweiteten Zustand einen Durchmesser D2. Der Schaft 12 des Werkzeugs 4 hat einen Durchmesser D3, welcher größer als D1 , jedoch kleiner als D2 ist, so dass der Schaft 12 im aufgeweiteten Zustand des Spannabschnitts 8 in die Bohrung 10 eingeführt werden kann und nach dem Abkühlen des Spannabschnitts 8 radial kraft- und reibschlüssig vom Spannabschnitt 8 umgriffen wird, da der Spannabschnitt 8 bestrebt ist, seine ursprüngliche Form, insbesondere den Durchmesser D1 , wieder anzunehmen.

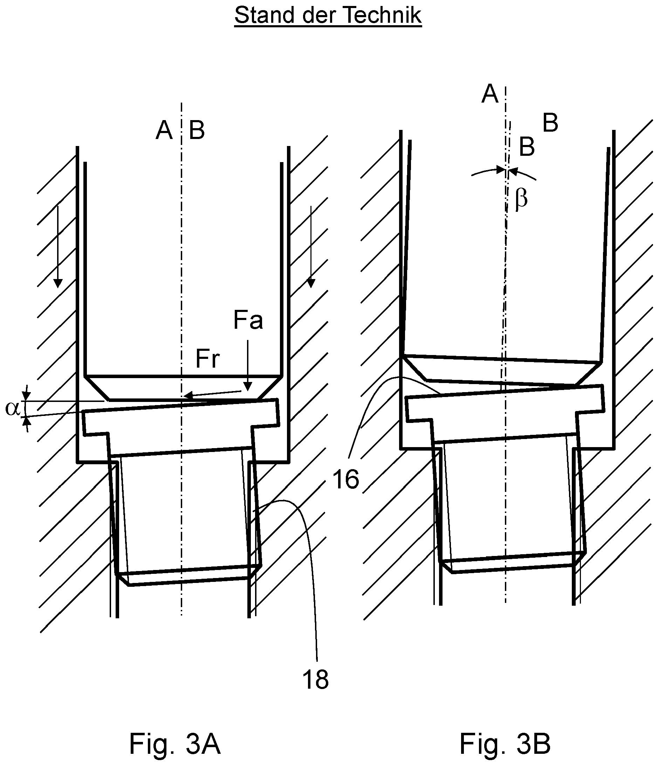

Aus Fig. 2 geht ferner hervor, dass sich auch die axiale Erstreckung des Spannabschnitts 8 bezüglich der Anlagefläche der Längeneinstellschraube 14 aufgrund der thermischen Ausdehnung verändert. So beträgt der Abstand von der Längeneinstellschraube 14 bis zum Ende der Bohrung 10 L1 und im erwärmten Zustand L2. Dies führt dazu, dass beim Schrumpfungsvorgang aufgrund der axialen Schrumpfung des Spannabschnitts 8 von der Länge L2 auf die Länge L1 über einen Reibschluss zwischen der Innenwand der Bohrung 10 und der Oberfläche des Schafts 12 das Werkzeug 4 eine Axialkraft auf die Einstellschraube 14 aufgebracht wird, welche die axial eingestellte und fixierte Einstellschraube 14 standhalten muss. Wenn wie in Fig. 3A gezeigt die Anschlagfläche 16 der Längeneinstellschraube 14 nicht senkrecht zur Drehachse A liegt, sei es durch einen Planfehler bei der Fertigung der Anschlagfläche 16 oder wie in Fig. 3A gezeigt aufgrund eines Koaxialfehlers des Gewindegangs 18 der Längeneinstellschraube 14 im Schrumpffutter 2, so kommt es dazu, dass die im Winkel α abweichende Anschlagfläche 16 einen Teil der Axialkraft Fa in eine radiale Komponente Fr umwandelt und das Schaftende 12 aufgrund des noch nicht vollends abgeschlossenen Abkühlungsvorgangs radial ablenkt. Wenn das Schrumpffutter weiter abkühlt, kann sich die Werkzeuglängsachse B bezüglich der Drehachse nicht mehr ausrichten, da die Axialkraft Fa mit Fortschreiten des Abkühlungsvorgangs weiter zunimmt und das Werkzeug 4 in der in Fig. 3B gezeigten Position verkeilt ist. Deshalb kann es sein, dass die Längsachse B bezüglich der Drehachse A um einen Winkel β abweicht, welcher sich über die Länge des Werkzeugs 4 doch merklich auf die Rundlaufgenauigkeit des Werkzeugs auswirken kann.

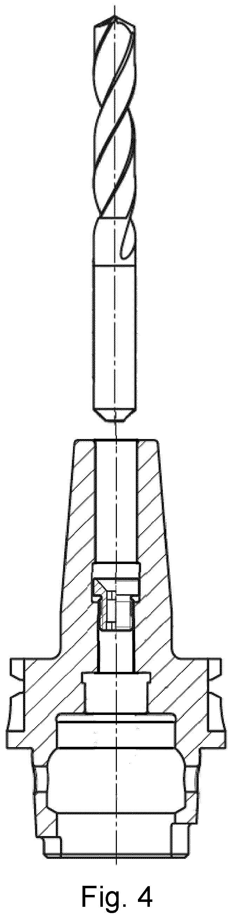

In den Fign. 1 bis 3 wurde die Stelleinrichtung in Bezug auf ein planes Schaftende, welches bei einer konventionellen Kühlmittelzuführung verwendet wird, erläutert. Die Stelleinrichtung kann jedoch auch in einer in Fig. 4 gezeigten Spannfutteranordnung verwendet werden, bei welchem das einzuspannende Werkzeug 4 ein kegelförmiges Schaftende aufweist, welches bei Minimalmengenschmierung (MMS) -Kühlung eingesetzt wird. Dabei ist zu beachten, dass der Ausgleichsabschnitt, welcher bei der erfindungsgemäßen Stelleinrichtung die Schnittstelle zum Werkzeugschaftende bildet, die für die MMS-Kühlmitteleinspeisung spezifische Kegelform aufweist und eine radial außen gelegene Dichtfläche mit dem kegelförmigen Endabschnitt des Werkzeugschafts bildet.

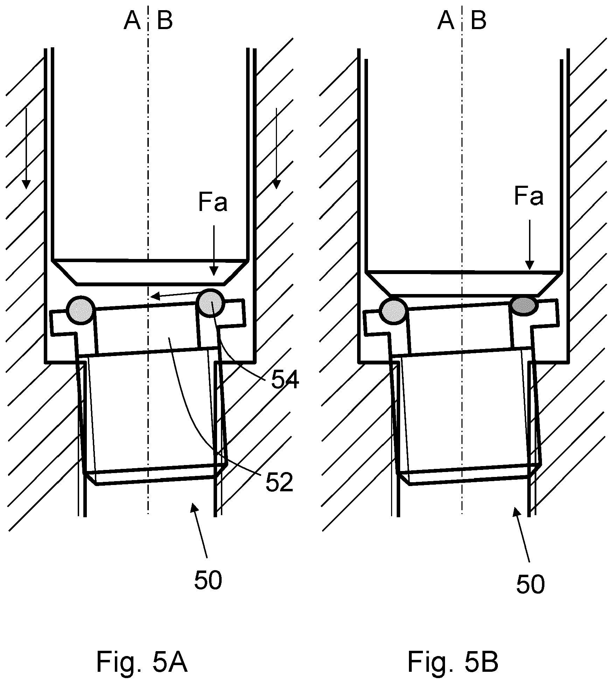

Fign. 5A und 5B zeigen eine Stelleinrichtung gemäß einer Ausführungsform der Erfindung, bei welcher der Ausgleichsabschnitt als ein in einer Längeneinstellschraube 52 vorgesehener und vorstehender O-Ring 54 ausgebildet ist, der in einer entsprechenden Nut an der Stirnseite Längeneinstellschraube 52 aufgenommen ist. Wenn das Schaftende 12 beim Abkühlen und Kontrahieren des Spannabschnitts 8 axial in Richtung Längeneinstellschraube 52 gedrückt wird, wird der O-Ring komprimiert und daher das Schaftende 12 nicht radial ausgelenkt. Deshalb bleiben die Werkzeuglängsachse B und die Drehachse A des Schrumpffutters 2 zueinander koaxial, wie in Fig. 5B gezeigt ist.

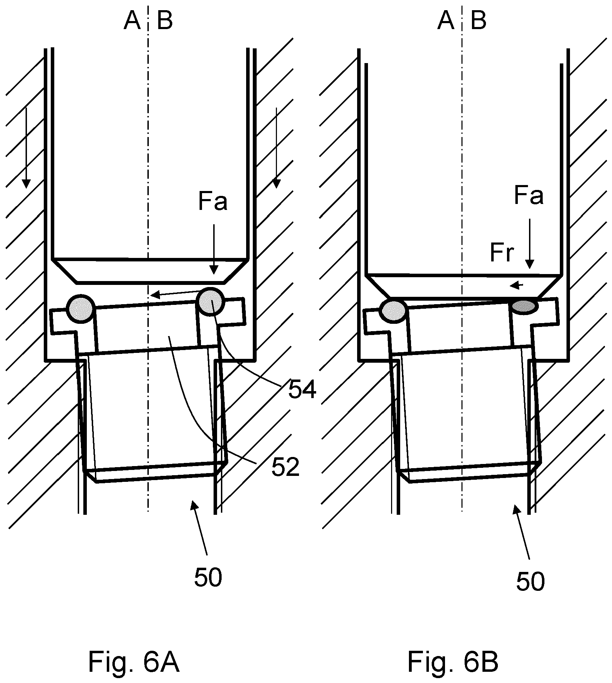

Sollte der O-Ring nicht die gesamte schrumpfungsbedingte axiale Bewegung des Spannabschnitts 8 kompensieren können, kann es dazu kommen, dass das Schaftende 12 den O-Ring so komprimiert, dass es die Stirnfläche der Längeneinstellschraube 52 erreicht und minimal radial ausgelenkt wird, wie in Fig. 6B durch den kleinen Pfeil für die Kraftkomponente Fr ausgedeutet sein soll. Im Vergleich zu einer Einstellschraube ohne einen erfindungsgemäßen Ausgleichsabschnitt (Fig. 6A) jedoch wird die radiale Kraftkomponente erheblich verringert und in einem verträglichen Bereich ohne nennenswerten Einfluss auf die Rundlaufgenauigkeit des Schaftwerkzeuges 4 gehalten.

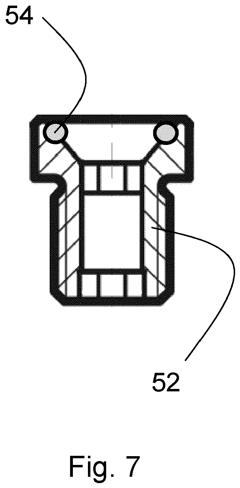

Fig. 7 zeigt ähnlich wie Fig. 4 eine erfindungsgemäße Stelleinrichtung, welche insbesondere für konische Werkzeugschaftenden geeignet ist. Der für den Längenausgleich verwendete O-Ring 54 befindet sich dabei im konischen Abschnitt der Längeneinstellschraube 52, so dass die Kegelfläche des Werkzeugschaftendes an diesem in Anlage kommt. Der O-Ring 54 sitzt dabei in einer in dem konischen Abschnitt der Längeneinstellschraube 52 dafür vorgesehenen umlaufenden Nut. Jedoch ist es auch denkbar, den O-Ring 54 lose in den konischen Abschnitt einzubringen, bevor das Schaftwerkzeug eingeführt wird. Im Übrigen gilt das zu den Figuren 9 und 10 Gesagte.

Alle beschriebenen Ausführungsformen der Erfindung funktionieren ebenfalls, wenn nicht die Längeneinstellschraube, sondern das Schaftende einen Planfehler oder Achsfehler aufweist, welcher ohne entsprechenden Ausgleich über Ausgleichskörper zu der in Fig. 3B gezeigten Verkippung des Werkzeugs im Schrumpffutter führen würde.

Im Übrigen wurde der in Fig. 2 dargestellte und durch die Stelleinrichtung (einschließlich des entsprechenden Ausgleichsabschnitts) geführte Kühlkanal 17 in den Fign. 3 und 5 lediglich aus Gründen der Übersichtlichkeit der Darstellung weggelassen.

## Patentansprüche

1. Schrumpffutter-Werkzeugaufnahme (2) für ein Schaftwerkzeug (4) mit einem Befestigungsabschnitt (6) für den Anschluss an eine Werkzeugmaschine, einem thermisch aufweitbaren Schrumpfabschnitt (8), der eine Bohrung (10) zur vorzugsweise zentrierten Aufnahme eines Werkzeugschaftes (12) aufweist, und einer Stelleinrichtung (50), welche in der Bohrung (10) axial beweglich angeordnet ist und über welche die axiale Position des Schaftwerkzeuges (4) vor einem Schrumpfungsvorgang im Schrumpfabschnitt (8) eingestellt wird, wobei
die Stelleinrichtung (50) einen Einstellabschnitt (52) zur, vorzugsweise stufenlosen, axialen Positionierung in der Schrumpffutter-Werkzeugaufnahme (2) und auf der dem Schaftwerkzeug (4) zugewandten Seite einen Ausgleichsabschnitt (54) zum Ausgleichen oder wenigstens Verringern schrumpfungsbedingter Positions- und/oder Lageänderungen des Schaftwerkzeuges (4) aufweist, wobei der Ausgleichsabschnitt (54) eine geringere Härte und/oder höhere Elastizität als die Schrumpffutter-Werkzeugaufnahme (2), der Einstellabschnitt (52) und das Schaftwerkzeug (4) aufweist, wobei
der Einstellabschnitt (52) eine Längeneinstellschraube ist, **dadurch gekennzeichnet, dass**
der Ausgleichsabschnitt (54) entweder
als ein in der Längeneinstellschraube (52) vorgesehener und vorstehender O-Ring (54), der in einer entsprechenden Nut an der Stirnseite der Längeneinstellschraube (52) aufgenommen ist; oder
als ein O-Ring (54), der sich in einem konischen Abschnitt der Längeneinstellschraube (52) befindet, so dass die Kegelfläche eines Werkzeugschaftendes an diesem in Anlage kommt,
ausgebildet ist.

2. Schrumpffutter-Werkzeugaufnahme (2) nach Anspruch 1, **dadurch gekennzeichnet, dass** die axiale Erstreckung des Ausgleichsabschnitts (54) größer als die schrumpfungsbedingte axiale Positionsänderung des Werkzeugs (4) ist.

3. Schrumpffutter-Werkzeugaufnahme (2) nach einem der Ansprüche 1 oder 2, **dadurch gekennzeichnet, dass** die Stelleinrichtung (50) zumindest einen Kühlmittelkanal (17) zur Versorgung des Schaftwerkzeuges (4) mit Kühlmittel aufweist.

4. Schrumpffutter-Werkzeugaufnahme (2) nach einem der Ansprüche 1 bis 3, **dadurch gekennzeichnet, dass** der Ausgleichsabschnitt (54) auf der dem Schaftwerkzeug (4) zugewandten Seite einen planen Anschlag (16) für plane Schaftenden aufweist.

## Claims

1. Shrink-fit chuck tool holder (2) for a shank tool (4) with a fastening section (6) for connecting to a machine tool, a thermally expandable shrink-fit section (8), which has a bore (10) for preferably centrally mounting a tool shank (12), and an adjusting device (50) which is arranged in the bore (10) to be axially movable and by means of which the axial position of the shank tool (4) is adjusted prior to a shrink-fitting process in the shrink-fit section (8), wherein
the adjusting device (50) has an adjusting section (52) for preferably stepless, axial positioning in the shrink-fit chuck tool holder (2) and on the side facing the shank tool (4) has a compensating section (54) for compensating or at least reducing changes in position and/or location of the shank tool (4) caused by shrinkage, wherein the compensating section (54) has a reduced degree of hardness and/or greater elasticity than the shrink-fit tool holder (2), the adjusting section (52) and the shank tool (4), wherein the
the adjusting section (52) is a length setting screw, **characterised in that**
the compensating section (54) is designed either
as an O-ring (54) provided and projecting in the length setting screw (52), which O-ring is mounted in a corresponding groove on the end face of the length setting screw (52); or
as an O-ring (54) which is located in a conical section of the length setting screw (52) so that the tapered face of a tool shank end fits against the latter.

2. Shrink-fit chuck tool holder (2) according to claim 1, **characterised in that** the axial extension of the compensating section (54) is greater than the change in axial position of the tool (4) caused by shrinkage.

3. Shrink-fit chuck tool holder (2) according to any of claims 1 or 2, **characterised in that** the adjusting device (50) has at least one coolant channel (17) for supplying the shank tool (4) with coolant.

4. Shrink-fit chuck tool holder (2) according to any of claims 1 to 3, **characterised in that** the compensating section (54) on the side facing the shank tool (4) has a planar stop (16) for planar shaft ends.

## Revendications

1. Porte-outil à mandrin de frettage (2) pour un outil à queue (4) avec une section de fixation (6) pour la connexion à une machine-outil, une section de retrait (8) thermiquement expansible, qui présente un alésage (10) pour recevoir de préférence de manière centrée une queue d'outil (12), et un dispositif de réglage (50) disposé de manière mobile axialement dans l'alésage (10) et au moyen duquel la position axiale de l'outil à queue (4) est réglée avant une opération de rétraction dans la section de retrait (8), dans lequel
le dispositif de réglage (50) présente une section de réglage (52) pour le positionnement axial, de préférence en continu, dans le porte-outil à mandrin de frettage (2) et, sur le côté tourné vers l'outil à queue (4), une section de compensation (54) pour compenser ou au moins réduire les modifications de position et/ou d'orientation de l'outil à queue (4) dues au retrait, dans lequel la section de compensation (54) présente une dureté inférieure et/ou une élasticité supérieure à celle du porte-outil à mandrin de frettage (2), de la section de réglage (52) et de l'outil à queue (4), dans lequel
la section de réglage (52) est une vis de butée réglable, **caractérisé en ce que**
la section de compensation (54) est formée soit
comme un joint torique (54) prévu et faisant saillie dans la vis de butée réglable (52), qui est reçu dans une rainure correspondante sur la face frontale de la vis de butée réglable (52) ; soit
comme un joint torique (54) situé dans une section conique de la vis de butée réglable (52) de sorte que la surface conique d'une extrémité de queue d'outil vient en contact avec celle-ci.

2. Porte-outil à mandrin de frettage (2) selon la revendication 1, **caractérisé en ce que** l'extension axiale de la section de compensation (54) est supérieure à la modification de position axiale de l'outil (4) due au retrait.

3. Porte-outil à mandrin de frettage (2) selon l'une quelconque des revendications 1 ou 2, **caractérisé en ce que** le dispositif de réglage (50) présente au moins un canal de liquide de refroidissement (17) pour l'alimentation de l'outil à queue (4) en liquide de refroidissement.

4. Porte-outil à mandrin de frettage (2) selon l'une quelconque des revendications 1 à 3, **caractérisé en ce que** la section de compensation (54) présente une butée plate (16) pour les extrémités de queue plates sur le côté tourné vers l'outil à queue (4).
